# EUROPÄISCHE PATENTSCHRIFT

(11) **EP 0 592 918 B1**
(45) Veröffentlichungstag und Bekanntmachung des Hinweises auf die Patenterteilung: **04.06.1997**
(21) Anmeldenummer: 93116031.1
(22) Anmeldetag: 05.10.1993
(51) Int. Cl.: B65G 35/08

(54) **Fördereinrichtung mit einem Strang von Gliedern**
Conveyor device with a strand of links
Dispositif de transport avec un cordon de maillons

(30) Priorität: 16.10.1992 DE 4234907
(43) Veröffentlichungstag der Anmeldung: 20.04.1994
(73) Patentinhaber: Tetra Laval Holdings & Finance SA, 1009 Pully (CH)
(72) Erfinder: Härtel, Norbert, CH-6101 Rossdorf (CH); Petz, Georg, CH-6103 Griesheim (CH)
(74) Vertreter: Weber, Dieter, Dr.

(56) Entgegenhaltungen:
- EP-A- 0 083 119
- DE-A- 4 030 362

## Beschreibung

Die Erfindung betrifft eine Fördereinrichtung mit einem Strang von über Stirnflächen aneinanderliegend angetriebenen und mittels Führungsschienen gehalterten Gliedern, auf deren gegenüberliegenden Seiten sich in Transportlängsrichtung erstreckende Nuten für die Aufnahme von Führungs- und Antriebsmitteln angeordnet sind, wobei für die Aufnahme eines Mitnehmerbolzens eine Bohrung das Glied in Querrichtung durchzieht.

Aus der Veröffentlichung DE-A-40 30 362 ist bereits eine Fördereinrichtung der vorstehenden Art bekannt. Bei der dort in Verbindung mit einem in sich geschlossenen, endlos umlaufenden Strang beschriebenen Einrichtung sind Glieder wie eine Art Kettenglieder aneinander anliegend vorgesehen. Die Glieder des Stranges bestehen in Form eines einzigen Körpers insgesamt aus Kunststoff, weil dadurch gute mechanische und insbesondere auch gute hygienische Eigenschaffen bei Maschinen erreichbar sind, die in der Lebensmittelindustrie eingesetzt werden.

Es hat sich aber gezeigt, daß der Wärmeausdehnungskoeffizient des Kunststoffes, der für derartige Kettenglieder in Frage kommt, verhältnismäßig groß ist. Es ist auch nicht möglich, andere Kunststoffe mit kleinerem Wärmeausdehnungskoeffizient zu verwenden. Sinn der bekannten Fördereinrichtung ist es auch, den Strang der Glieder dicht aneinanderliegend und damit über die jeweiligen Stirnflächen der Glieder reibend anzutreiben, z.B. durch einen Schubantrieb. Wenn allerdings der Strang endlos ist, kann man die Glieder auch an einer Stelle durch Zug antreiben, weil sich diese Zugkraft dann in eine Schubkraft umwandelt. In jedem Falle ist eine Reibung zwischen den Gliedern und Führungen unvermeidbar. Diese Reibung ist eine erste Wärmequelle, die in manchen Fällen zu einer unerwünschten Erwärmung des Gliedes führt. Wenn die bekannte Fördereinrichtung in Herstellungsmaschinen für Flüssigkeitspackungen im Hygienebereich eingesetzt wird, wirkt außer der Reibung zwischen den Gliedern sozusagen von innen her außerdem die Wärme aus der Umgebung auf die einzelnen Glieder mit der Folge einer nicht unerheblichen Erwärmung. In extremen Anwendungsfällen hat man Temperaturen bis zu 60°C bei einem Strangglied gemessen, und die Abführung der Wärme war bei diesem extremen Anwendungsfall der Fördereinrichtung im Hygienebereich einer sehr leistungsstarken Maschine kaum gegeben, weil die bekannte Fördereinrichtung dort in einem gekapselten Raum arbeitete.

Bei dem erwähnten Anwendungsfall befanden sich allein im Obertrum des Stranges zwanzig Glieder hintereinanderliegend, deren jedes sich infolge der Erwärmung und des materialeigenen Wärmeausdehnungskoeffizienten um 1 mm verlängerte mit dem Ergebnis einer allein 20 mm Verlängerung des Obertrums. Das bedeutete eine untragbare Toleranz mit entsprechenden Klemmwirkungen und dergleichen. Es handeite sich hier zwar um einen extremen Anwendungsfall einer Abfüllmaschine flüssiger Lebensmittel in Verpackungen mit großer Leistung, bei der außerdem die Fördereinrichtung präzise Bewegungen durchführen sollte und eine exakte Positionierung der Packungen unter bestimmte Stationen gewährleisten sollte. Wünschenswert ist aber die Schaffung einer Fördereinrichtung, welche derart gute Eigenschaften und Merkmale aufweist, daß auch den Anforderungen in einem rauhen Betrieb und bei extremen Anwendungsbedingungen genügt werden kann.

Der Erfindung liegt daher die Aufgabe zugrunde, für eine Fördereinrichtung ein Glied zu schaffen, bei dem außer einer exakten Führung geförderter Werkstücke, präziser Positionierung unter einzelne Bearbeitungsstationen und guter Reinigungsmöglichkeit der Glieder gleichwohl die Erwärmung auch im rauhen Betrieb und unter extremen Bedingungen keine nachteiligen Folgen hat. Ziel war es also unter anderem, ein ähnliches Glied wie bei der bekannten Fördereinrichtung zu schaffen, welches aber eine wesentlich geringere Wärmeausdehnung hat. Dabei war zu beachten, daß die Verwendung eines anderen Materials zur Vermeidung der nachteiligen Längenausdehnung nicht ohne weiteres möglich ist. Wegen der Einhaltung der Hygieneforderungen mußten auf Metallschienen gleitende Teile vorgesehen werden, und auch die Reibverhältnisse konnten nicht wesentlich geändert werden. Die Lösung der Aufgabe mußte also im Rahmen einer Materialkombination von Kunststoff und rostfreiem Metall gesucht werden, weil einerseits die Betriebsbedingungen für flüssige Lebensmittel erfüllt werden müssen und andererseits die Reinigungsmittel mit den Materialien verträglich sein müssen.

Trotz all der Bedingungen und Schwierigkeiten ist es gelungen, die Aufgabe zu lösen, gemäß der vorliegenden Erfindung nämlich dadurch, daß ein sich in Transportlängsrichtung erstreckendes Metallstück an dem wenigstens ein erstes Kunststoffteil aufweisenden Glied derart angebracht ist, daß die Stirnfläche des wenigstens einen ersten Kunststoffteiles über das Metallstück in Transportlängsrichtung vorsteht, daß die durch eine Temperatursteigerung verursachte Längenausdehnung des Gliedes überwiegend durch die Längenausdehnung des Metallstückes bestimmt wird, und daß die Gesamtlänge des Gliedes größer als die Gesamtlänge des Metallstückes ist. Gegenüber der bekannten Fördereinrichtung ist in jedes Glied des Stranges ein Metallstück längs eingesetzt, welches um 5 bis 30%, vorzugsweise 10 bis 20%, kürzer als die Gesamtlänge des Gliedes ist. Ein Großteil des Gliedes wird also von dem Metallstück eingenommen, so daß die Wärmeausdehnung bezüglich dieses Längenanteils nur für das Metallstück relevant ist. Weil sich aber das Metallstück wesentlich weniger ausdehnt als der Kunststoff, ist damit die befürchtete Längenausdehnung wesentlich reduziert. Nur ein kleiner Restteil von z.B. 5 bis 10 % der Gesamtlänge des Gliedes besteht aus Kunststoff. Trotz des höheren Wärmeausdehnungskoeffizienten des Kunststoffes wirkt sich eine Temperatursteigerung des Gesamtgliedes nur zu einer geringen Längenvergrößerung aus. Gleichzeitig kann dadurch erreicht werden, daß wenigstens eine Stirnfläche des Gliedes aus Kunststoff besteht, so daß entweder zwei Kunststoffflächen oder höchstens ein Ende des Metallstückes mit einer Kunststofffläche gegeneinander reiben. Der Kunststoff gestattet nämlich eine schmierfreie Bewegung der Glieder der Fördereinrichtung relativ zueinander. Dadurch ist die gewünschte präzise Positionierung unter die einzelnen Bearbeitungsstationen möglich, die an einem Glied befestigten Werkstücke können exakt geführt werden, und gleichwohl ist die ganze Fördereinrichtung sehr gut zu reinigen. Bei einer bevorzugten ersten Ausführungsform ist erfindungsgemäß ferner vorgesehen, daß das Metallstück ein sich in Transportlängsrichtung durch das Kunststoffteil des Gliedes erstreckender Schubbolzen ist, dessen eines Ende um einen Betrag über die eine erste Stirnfläche des Kunststoffteils nach außen übersteht und dessen anderes Ende gegen eine in dem Kunststoffteil angebrachte, in Querrichtung des Gliedes verlaufende Anschlagfläche anliegt, welche von der zweiten Stirnfläche in einem Abstand liegt, der klein gegenüber der Länge des Metallstückes ist. Bei dieser Ausführungsform reibt das eine Ende des Schubbolzens gegen die Kunststoffstirnfläche des benachbarten Gliedes, und diese Materialpaarung findet sich über die ganze Länge der Fördereinrichtung. Trotz der Verwendung des Schubbolzens aus Metall ist die Gesamtlänge des Gliedes, auf die es für eine einwandfreie Funktion der Fördereinrichtung wesentlich ankommt, genau und präzise bestimmbar, denn in dem Kunststoffteil ist an einer exakt bestimmbaren und vorzugebenden Stelle die Anschlagfläche vorgesehen. Diese liegt in einem exakten Abstand von der zweiten Stirnfläche, so daß damit die Gesamtlänge des Gliedes festliegt. Trotzdem ist die Gesamtlänge im Hinblick auf das Material so aufgeteilt, daß sich über den größten Teil der Transportlängsrichtung der Schubbolzen erstreckt mit dem kleinen Wärmeausdehnungskoeffizienten, während nur der kleinste Teil der Transportlängsrichtung des Gliedes von dem Kunststoff eingenommen wird. Der Schubbolzen dehnt sich im Falle von nicht rostendem Stahl nur um 1/10 soviel aus wie der Kunststoff. Dadurch ist die Gesamtausdehnung des Gliedes der erfindungsgemäßen Fördereinrichtung auch bei Temperatursteigerungen erheblich herabgesetzt. Derjenige Anteil der Länge, der noch aus Kunststoff besteht und sich bei der Ausdehnung auswirkt, also nur der Teil, der zur Länge des Schubbolzens hinzuzuaddieren ist, wird möglichst kurz gehalten, beispielsweise 5 oder 10 % der Gesamtlänge des Gliedes; so kurz, wie es gerade die Stabilität des Gliedes in mechanischer Hinsicht erlaubt.

Eine andere bevorzugte Ausführungsform ist erfindungsgemäß dadurch gekennzeichnet, daß das Glied des Förderstranges wenigstens zwei, im Abstand voneinander angebrachte Kunststoffteile aufweist, wobei Stirnflächen nach außen über das Metallstück vorstehen, und daß die Kunststoffteile durch das Metallstück miteinander verbunden sind. Im Falle einer solchen Ausgestaltung des Gliedes kann der größte Teil der Wärmeausdehnung der Kunststoffsegmente nach innen verlagert werden. Der Innenbereich ist frei und bestimmt nicht die präzise Gesamtlänge des Gliedes. Außerdem ist es bei dieser Ausführungsform möglich, an beiden Enden des Gliedes Stirnflächen aus Kunststoff vorstehend so zu haben, daß Kunststoff gegen Kunststoff reibt, wenn sich die Glieder im Förderstrang befinden und bewegen. Dadurch sind etwaige Abriebstellen nahezu vollständig verhindert.

Das die zwei Kunststoffteile verbindende Metallstück kann in der Mitte, wird aber bei einer besonders bevorzugten Ausführungsform außen auf jeder Seite angebracht.

Daher ist es erfindungsgemäß besonders vorteilhaft, wenn jedes Glied zwei, an den Seitenwangen der Kunststoffteile befestigte Metallstücke in Form von Stegen, Laschen oder Schienen aufweist, an denen vorzugsweise Werkstückträger unlösbar angebracht sind. Dabei ist es zweckmäßig, wenn die Befestigungsstellen der Metallstücke an den Kunststoffteilen weit voneinander im Abstand liegen bzw. außen im Endbereich des Gliedes vorgesehen werden. Dadurch kann eine günstige Aufteilung im Hinblick auf die Wärmeausdehnung gewählt werden, nämlich den Hauptteil der Wärmeausdehnung auf das Metallstück übertragen und nur den Rest von 5 % oder mehr im Kunststoffteil zu belassen, weil dieses nach außen überragt und die schmierfreie Stirnfläche als Reibfläche bildet.

Wenn in Verbindung mit dem Metallstück die Form eines Steges angesprochen ist, dann ist damit eine längliche Form von einem Endbereich des Gliedes zum gegenüberliegenden gemeint. Solche Stege können nur aus einem länglichen Stab bestehen, die Stege können aber auch die Form eines Doppel-T-Steges haben, um über die hauptsächliche Transportlängsrichtung des Gliedes den Hauptteil des Steges vorzusehen und vorzugsweise im Bereich seines Endes kleine Querstege zu haben, um eine gute Verdrehsicherung zu gewährleisten. Dadurch können die Kunststoffteile an der richtigen Stelle (außen) und verdrehgesichert mit den beiden an den Seitenwangen befindlichen Metallstücken befestigt werden.

Bei einer anderen Ausführungsform ist in Verbindung mit dem Metallstück von einer Lasche oder Schiene die Rede. Hierbei kann es sich um plattenartige Gebilde handeln, die vorzugsweise sogar mit Sicken verstärkt sind.

In jedem Falle sind die an den Seitenwangen befestigten Metallstücke in dem vorstehenden Sinne Verbindungsstücke, denn sie verbinden zwei im Abstand voneinander angeordnete Kunststoffteile. Gleichzeitig können diese Metallstücke auch als Halterung für Werkstückträger verwendet werden. Letztere kann man entweder über die Befestigung der Metallstücke an den Kunststoffteilen oder separat mit den Werkstückträgern verbinden.

Als sehr günstige Materialpaarung hat man erfindungsgemäß vorgesehen, daß die Metallstücke aus nichtrostendem Stahl bestehen und der Kunststoff vorzugsweise UHMW-PE (DIN 7728) ist. Ein solcher Kunststoff ist mit den in der Lebensmittelindustrie üblichen Reinigungsmitteln gut verträglich. Gleichzeitig weist er die gewünschten mechanischen Eigenschaften auf, d.h. ein Kunststoffteil aus einem solchen Material ist starr und formstabil, wobei die äußeren Oberflächen, hier insbesondere die Stirnflächen, schmierfrei gut aufeinander gleiten können.

Die Metallstücke oder Laschen kann man selbstverständlich auch winkelartig formen, um dann die Werkstückträger noch einfacher an den Gliedern befestigen zu können. Nichtrostender Stahl wird gewählt, weil er alle Anforderungen in Verbindung mit der Hygiene bei Lebensmittelverpackungen erfüllt und sich wesentlich geringer ausdehnt als z.B. Messing oder Aluminium.

Die stegartigen Metallstücke legt man zur Verdrehsicherung vorzugsweise auch in in dem betreffenden Kunststoffteil entsprechend vorgesehene Nuten ein. In diesem Zusammenhang ist es besonders zweckmäßig, wenn erfindungsgemäß die laschenförmigen Metallstücke Versteifungsrippen aufweisen und wenn zwischen den Metallstücken und den Kunststoffteilen Verdrehsicherungseinrichtungen vorgesehen sind, z.B. Bolzen, Spannschrauben, T-Profile derart, daß ein Metallstück jeweils verdrehfest am Kunststoffteil zu befestigen ist.

Der Abstand z.B. zweier Verbindungsbolzen voneinander in Transportlängsrichtung, mit deren Hilfe die laschenartigen Metallstücke mit den Kunststoffteilen verbunden werden, wird vorzugsweise solang wie möglich gewählt, um den Anteil der Wärmeausdehnung möglichst weitgehend auf die Metallstücke zu übertragen. Es muß in dem jeweiligen Kunststoffteil zur Stirnfläche nach außen nur soviel Material verbleiben, daß eine einwandfreie Festigkeit und Funktionssicherheit gewährleistet bleiben. Im Abstand quer zu solchen Verbindungsbolzen können nach unten und oben kleine Verdrehsicherungsbolzen eingebracht sein, die sich von den laschenartigen Metallstücken von außen nach innen ein Stück weit in die Kunststoffteile hinein erstrecken.

Beispielsweise kann bei einer Gesamtlänge des Gliedes von etwa 200 mm der Abstand vom Außenende des Verbindungsbolzens zur benachbarten Stirnfläche nur etwa 5 mm betragen. Bei dieser Ausführungsform handelt es sich dann um einen Anteil von 2,5 % auf jeder Seite. Insgesamt trägt also über 5 % der Länge des Gliedes das Kunststoffmaterial zur Ausdehnung bei, während die 95 % vom Metallstück übernommen werden mit der entsprechend geringen Wärmeausdehnung.

Weitere Vorteile, vorteilhafte Merkmale und Anwendungsmöglichkeiten der vorliegenden Erfindung ergeben sich aus der folgenden Beschreibung in Verbindung mit bevorzugten Ausführungsformen. Es zeigen:
- Figur 1: die Längsquerschnittsansicht durch ein Strangglied in einer ersten Ausführungsform,
- Figur 2: eine Seitenansicht des Gliedes der Figur 1 von einem Ende, wenn man in Figur 1 von links nach rechts blickt,
- Figur 3: die perspektivische Darstellung eines Kunststoffteils bei einer anderen Ausführungsform, bei welcher das Glied aus zwei im Abstand voneinander gehaltenen Kunststoffteilen besteht, die über doppel-T-stegartige Metallstücke miteinander verbunden und gehalten sind,
- Figur 4: eine stirnseitige Ansicht des Kunststoffteils der Figur 3,
- Figur 5: eine Seitenansicht des Kunststoffteils, wenn man in den Figuren 3 und 4 von links nach rechts blickt,
- Figur 6: eine stirnseitige Ansicht eines Kunststoffteils bei einer anderen dritten Ausführungsform, wobei laschenartige Metallstücke seitlich durch Verbindungsbolzen verschraubt sind,
- Figur 7: die perspektivische Darstellung des Gliedes der dritten Ausführungsform der Figur 6,
- Figur 8: eine Seitenansicht auf das Glied nach der dritten Ausführungsform, wobei nur die Versteifungsrippen unsichtbar sind, und
- Figur 9: eine Draufsicht auf das Glied nach der dritten Ausführungsform gemäß den Figuren 6 bis 8.

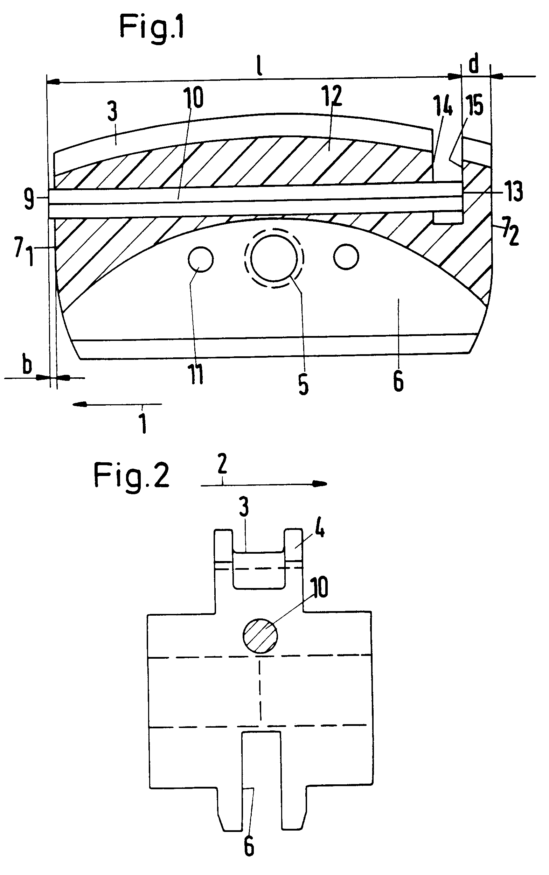

Die Transportlängsrichtung ist für alle Ausführungsformen nur in Figur 1 als nach links gerichteter Pfeil dargestellt und mit 1 bezeichnet, obgleich man die Fördereinrichtung auch in umgekehrter Richtung bewegen könnte, so daß der Pfeil auch nach rechts zeigen müßte. Die Richtung des Transportes bleibt aber nach wie vor in der Linie 1. Die Querrichtung ist in Figur 2 mit einem nach rechts weisenden Pfeil 2 dargestellt, wobei auch hier die Querrichtung in entgegengesetzter Richtung angenommen werden könnte, in jedem Falle bleibt auch die Querrichtung in der Linie 2.

Das Glied der ersten Ausführungsform gemäß Figuren 1 und 2 hat die Form eines Quaders, der in Transportlängsrichtung 1 länger ist als in Querrichtung 2. Es kann bei einer bevorzugten Ausführungsform angenommen werden, daß sich der nicht dargestellte Strang von Gliedern in Längsrichtung 1 horizontal erstreckt, wobei der Einfachheit halber dann auch die Querrichtung 2 horizontal angenommen wird. Die Länge L des Gliedes beträgt beispielsweise 200 mm. Seine Breite beträgt 70 mm wie auch seine Höhe. Auf der oberen äußeren Fläche in der Mitte erstreckt sich in Transportlängsrichtung 1 eine nutenförmige Ausnehmung 3, die gebogen ist und zwei Seitenwangen 4 hat.

Eine Bohrung 5 durchzieht das Glied in Querrichtung 2 etwa auf halber Höhe derart, daß die Bohrung 5 auch eine sich In Transportlängsrichtung 1 erstreckende untere Ausnehmung 6 durchzieht. Diese befindet sich bei einem im Strang eingebauten Glied auf der inneren, den (ebenfalls nichtgezeigten) Umlenkrädern zugewandten Seite. Zum Beispiel können die Zähne von Umlenkrädern in der Ausnehmung aufgenommen werden. Das Glied greift mit Hilfe seiner Ausnehmung 6 auch in einem gebogenen Endbereich der Fördereinrichtung über Umlenkräder. Ein nicht gezeigter Antriebsbolzen ist fest in der Bohrung 5 angebracht. Damit können die Zähne am Umfang eines Antriebsrades für die Bewegung des Gliedes in der Fördereinrichtung sorgen. Weil ein Glied direkt hinter dem anderen sitzt, schiebt das jeweils angetriebene Glied die in Transportrichtung 1 davorliegenden Glieder mit Schiebeeffekt, so daß auch bei Einleitung hoher Schubkräfte keine Verlängerung des Stranges befürchtet werden muß.

Die vorstehend beschriebene obere Nut 3 dient dem Gleiteingriff einer von außen das Glied im Strang haltenden gekrümmten Führungsschiene, die hier ebenfalls nicht dargestellt ist.

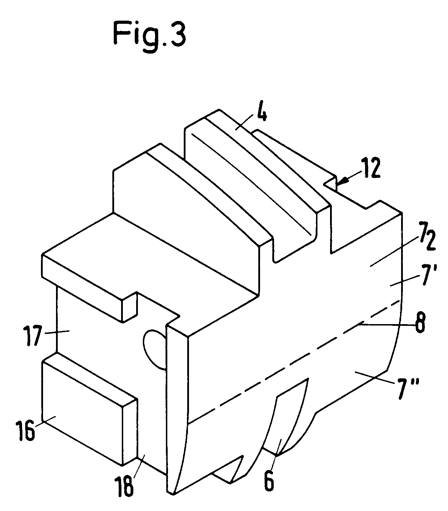

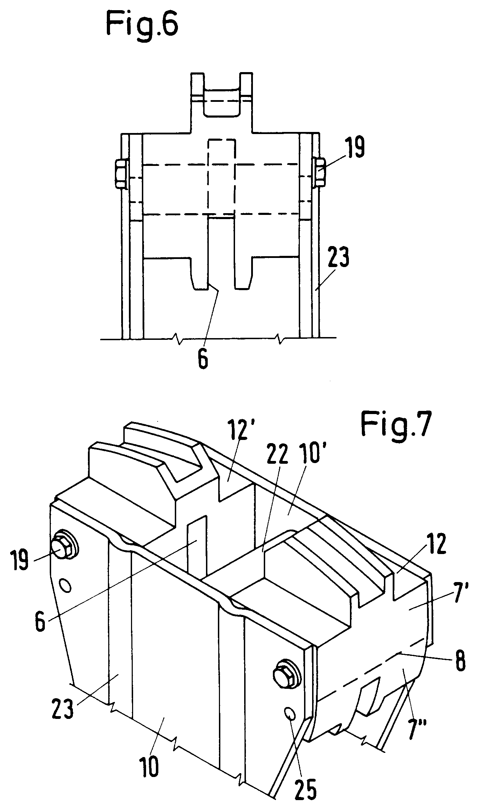

Am vorderen und hinteren Ende ist jedes Glied mit einer Stirnfläche 7 versehen, die oberhalb einer in den Figuren 3 und 7 gezeigten gestrichelten Linie 8 eine ebene Fläche 7' ist, während sich unter der Geraden 8 eine gekrümmte Fläche 7'' anschließt. Im geraden Abschnitt des nicht gezeigten Stranges schiebt das eine Glied das jeweils nächste über die ebene Stirnfläche 7', und in den gut vorstellbaren, aber nicht gezeigten gekrümmten Abschnitten erfolgt das gegenseitige Schieben längs einer Linienberührung zwischen den gekrümmten Stirnflächen 7''.

Nur bei der Ausführungsform nach den Figuren 1 und 2 erfolgt der Schiebebetrieb jeweils über das eine Ende 9 des Schubbolzens 10, welcher bei dieser Ausführungsform das Metallstück 10 ist.

Neben der Bohrung 5 in Querrichtung 2 befinden sich in Längstransportrichtung 1 im Abstand zwei kleine Hilfssackbohrungen 11, um das Glied im Betrieb gegen die Drehung um eine Achse festzulegen, die z.B. durch die Achse der Bohrung 5 in Querrichtung 2 verläuft.

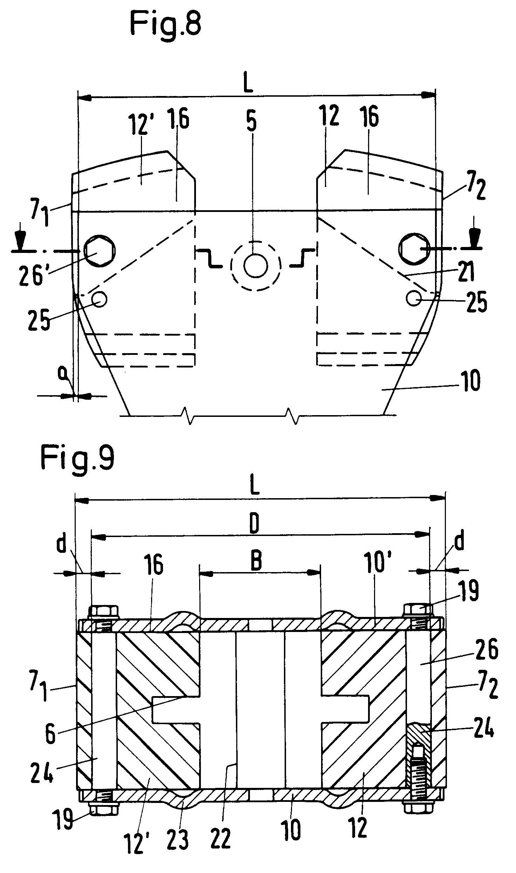

Die Gesamtlänge des jeweiligen Gliedes aller Ausführungsformen ist in Figur 9 mit L bezeichnet. Diese setzt sich bei der ersten Ausführungsform nach den Figuren 1 und 2 zusammen aus der Länge l des schubbolzenartigen Metallstückes 10 + dem Abstand d. Um diesen ragt die zweite Stirnfläche 7₂ des Kunststoffteiles 12, die in Figur 1 rechts gezeigt ist, über das andere Ende 13 des schubbolzenartigen Metallstückes 10 vor. Die in den Figuren jeweils links gezeigte erste Stirnfläche 7₁ steht bei der Ausführungsform der Figuren 1 und 2 hinter das eine, linke Ende des Metallstückes 10 um einen Abstand b zurück mit der Folge, daß bei der Anordnung der Glieder hintereinander das jeweilige eine Ende 9 des Metallstückes 10 gegen die zweite Stirnfläche 7₂ des nächsten, nicht gezeigten Gliedes anliegt und dadurch den Schubantrieb bewirkt. Bei dieser ersten Ausführungsform reibt also immer ein schubbolzenartiges Metallstück 10 über sein eines Ende 9 mit einer Stirnfläche 7₂ des nächsten Kunststoffteiles 12 aus dem eingangs erwähnten Kunststoff.

Der Abstand d wird dadurch gebildet, daß in Querrichtung 2 eine von einer Seite zur anderen durchgehende Quernut 14 so eingebracht wird, daß sich auf der der rechten Stirnfläche 7₂ nächstliegenden Seite eine ebene Anschlagfläche 15 ergibt, gegen welche das besagte andere Ende 13 des schubbolzenförmigen Metallstückes 10 in Anlage kommt. Damit befindet sich dieses rechte Ende 13 des Metallstückes 10 genau im Abstand d von der zweiten Stimfläche 7₂ des Kunststoffteiles 12.

Es versteht sich, daß im Betrieb bei Aufwärmung des Gliedes zwar insgesamt eine Längenausdehnung unvermeidlich ist, daß aber günstige Wärmeausdehnungskoeffizienten so verwendet werden können, daß die Gesamtausdehnung des Gliedes bei Erwärmung geringfügig ist. Dies gelingt dadurch, daß die Haupt-Längenausdehnung von dem Metallstück 10 übernommen wird, und nur der restliche Anteil der Gesamtlänge L von dem Stück d des Kunststoffteiles 12 übernommen wird.

Dabei versteht es sich, daß das bolzenförmige Metallstück 10 ebenso in Transportlängsrichtung 1 angeordnet ist wie der Abstand d zwischen dem betreffenden rechten Ende des Metallstückes 10 und der zweiten Stirnfläche 7₂ gemessen wird. Der Überstand b des einen Endes 9 des Metallstückes 10 auf der in Figur 1 links gezeigten Seite kann sehr gering sein, z.B. nur 10 % des Abstandes d betragen.

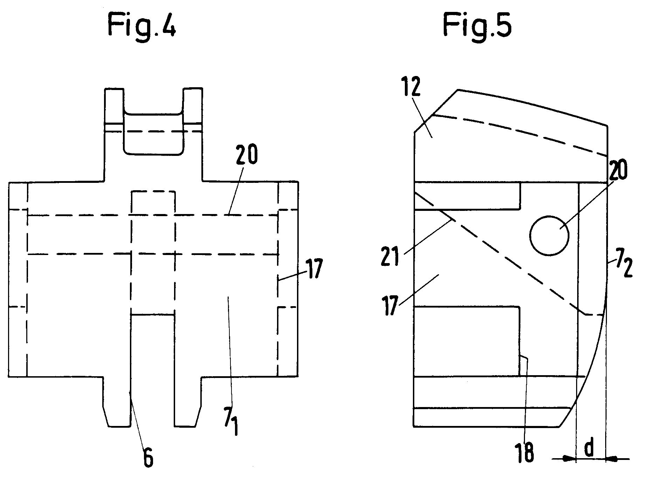

Bei den anderen Ausführungsformen nach den Figuren 4 bis 9 weist jedes Glied wenigstens zwei im Abstand B (Figur 9, lichte Weite) voneinander angebrachte Kunststoffteile 12 und 12' auf. Diese sind gemäß der Darstellung des dritten Ausführungsbeispieles nach den Figuren 6 bis 9 durch zwei laschenartige Metallstücke 10,10' miteinander verbunden. Diese Metallstücke 10,10' sind an den äußeren Seitenwangen 16 der Kunststoffteile 12,12' befestigt.

Bei der Ausführungsform der Figuren 3 bis 5 sieht man wiederum die auf gegenüberliegenden Seiten sich in Transportlängsrichtung 1 erstreckenden Nuten 3 (oben) und 6 (unten). Außerdem sind hier in jeder Seitenwange 16 eine sich in Transportlängsrichtung 1 erstreckende Längsnut 17 und am äußeren Ende eine sich quer dazu erstreckende Vertikalnut 18 vorgesehen. Die Längsnut 17 und die Quernut 18 im Kunststoffteil 12 dienen der Aufnahme eines nicht gezeigten doppel-T-stegförmigen Metallstückes, welches über Verbindungsbolzen mit Schrauben 19 (Figuren 6 bis 9) durch Querbohrungen 20 befestigt sind.

Die in jeder der Seitenwangen 16 eingelassenen Metallstücke verbinden damit zwei Kunststoffteile 12,12' miteinander und halten diese fest im Abstand zueinander und durch die Doppel-T-Stegform auch verdrehfest.

Anstelle der gebogenen unteren Ausnehmung bzw. Nut 6 gemäß Ausführungsform nach den Figuren 1 und 2 ist die untere Nut 6 bei den anderen Ausführungsformen nach den Figuren 3 bis 9 teilweise mit geraden Begrenzungslinien im jeweiligen Kunststoffteil 12,12' ausgebildet. Hierzu wird auf die in den Figuren 5 und 8 schräg verlaufenden gestrichelten Linien 21 verwiesen.

Ähnlich wie bei der zweiten Ausführungsform nach den Figuren 3 bis 5 werden auch bei der dritten Ausführungsform nach den Figuren 6 bis 9 zwei Kunststoffteile 12, 12' durch jeweils zwei Metallstücke 10, 10' im Abstand B voneinander (lichte Weite) gehalten. Während die mittlere Querbohrung 5 in den laschenförmigen Metallstücken 10, 10' in den Figuren 6, 8 und 9 angedeutet sind, wurden diese in Figur 7 zwecks Klarheit weggelassen. Dennoch sieht man dort ein Abstandsstück 22, welches man auch in Figur 9 in Draufsicht erkennt, und durch welches der nicht gezeigte Antriebsbolzen hindurchläuft.

Die Metallstücke 10, 10' haben hier die Form von Laschen, in denen sich in vertikaler Richtung erstreckende Versteifungsrippen 23 zusätzlich vorgesehen sind. In vertikalem Abstand unter den Verbindungsbolzen 24 mit den Schrauben 19 befinden sich als Verdrehsicherungseinrichtung Hilfssackbohrungen 25, in welche Stifte, Bolzen oder Schrauben eingesetzt werden, so daß sich das jeweilige Kunststoffteil 12 oder 12' im Betrieb nicht um die Achse 26 oder 26' drehen kann, die in der Achse des Verbindungsbolzens 24 liegt.

## Patentansprüche

1. Fördereinrichtung mit einem Strang von über Stirnflächen (7₁, 7₂) aneinanderliegend angetriebenen und mittels Führungsschienen gehalterten Gliedern, auf deren gegenüberliegenden Seiten sich in Transportlängsrichtung (1) erstreckende Nuten (3, 6) für die Aufnahme von Führungs- und Antriebsmitteln angeordnet sind, wobei für die Aufnahme eines Mitnehmerbolzens eine Bohrung (5) das Glied in Querrichtung (2) durchzieht, dadurch gekennzeichnet, daß ein sich in Transportlängsrichtung (1) erstreckendes Metallstück (10) an dem wenigstens ein erstes Kunststoffteil (12) aufweisenden Glied derart angebracht ist, daß die Stirnfläche (7₁, 7₂) des wenigstens einen ersten Kunststoffteiles (12) über das Metallstück (10) in Transportlängsrichtung (1) vorsteht, daß die durch eine Temperatursteigerung verursachte Längenausdehnung des Gliedes überwiegend durch die Längenausdehnung des Metallstückes (10) bestimmt wird, und daß die Gesamtlänge (L) des Gliedes größer als die Gesamtlänge (l) des Metallstückes (10) ist.

2. Fördereinrichtung nach Anspruch 1, dadurch gekennzeichnet, daß das Metallstück (10) ein sich in Transportlängsrichtung (1) durch das Kunststoffteil (12) des Gliedes erstreckender Schubbolzen (10) ist, dessen eines Ende (9) um einen Betrag (b) über die eine erste Stirnfläche (7₁) des Kunststoffteiles (12) nach außen übersteht und dessen anderes Ende (13) gegen eine in dem Kunststoffteil (12) angebrachte, in Querrichtung (2) des Gliedes verlaufende Anschlagfläche (15) anliegt, welche von der zweiten Stirnfläche (7₂) in einem Abstand (d) liegt, der klein gegenüber der Länge (l) des Metallstückes (10) ist (Fig. 1 und 2).

3. Fördereinrichtung nach Anspruch 1 oder 2, dadurch gekennzeichnet, daß das Glied des Förderstranges wenigstens zwei, im Abstand (B) voneinander angebrachte Kunststoffteile aufweist (12, 12') wobei Stirnflächen (7₁, 7₂) nach außen über das Metallstück (10) vorstehen, und daß die Kunststoffteile (12, 12') durch das Metallstück (10, 10') miteinander verbunden sind (Fig. 3 - 9).

4. Fördereinrichtung nach einem der Ansprüche 1 bis 3, dadurch gekennzeichnet, daß jedes Glied zwei, an den Seitenwangen (16) der Kunststoffteile (12, 12') befestigte Metallstücke (10, 10') in Form von Stegen, Laschen oder Schienen aufweist, an denen vorzugsweise Werkstückträger unlösbar angebracht sind.

5. Fördereinrichtung nach einem der Ansprüche 1 bis 4, dadurch gekennzeichnet, daß die Metallstücke (10, 10') aus nicht rostendem Stahl bestehen und der Kunststoff vorzugsweise UHMW-PE (DIN 7728) ist.

6. Fördereinrichtung nach einem der Ansprüche 1 bis 5, dadurch gekennzeichnet, daß die laschenförmigen Metallstücke (10, 10') Versteifungsrippen (23) aufweisen und daß zwischen den Metallstücken (10, 10') und den Kunststoffteilen (12) Verdrehsicherungseinrichtungen (11; 17, 18; 25) vorgesehen sind.

## Claims

1. A conveyor apparatus having a line of members which are driven in a condition of bearing against each other by way of end surfaces (7₁, 7₂) and which are held by means of guide rails and on oppositely disposed sides of which are arranged grooves (3, 6) extending in the longitudinal transportation direction (1) for receiving guide and drive means, wherein a bore (5) passes through the member in the transverse direction (2) for receiving an entrainment pin, characterised in that a metal portion (10) extending in the longitudinal transportation direction (1) is attached to the member having at least one first plastics portion (12), in such a way that the end surface (7₁, 7₂) of the at least one first plastics portion (12) projects beyond the metal portion (10) in the longitudinal transportation direction (1), that the linear expansion of the member which is caused by a rise in temperature is predominantly determined by the linear expansion of the metal portion (10), and that the overall length (L) of the member is greater than the overall length (l) of the metal portion (10).

2. A conveyor apparatus according to claim 1 characterised in that the metal portion (10) is a thrust pin (10) which extends in the longitudinal transportation direction (1) through the plastics portion (12) of the member and of which one end (9) projects outwardly by a distance (b) beyond the one first end surface (7₁) of the plastics portion (12) and of which the other end (13) bears against an abutment surface (15) which is provided in the plastics portion (12) and which extends in the transverse direction (2) of the member and which is at a spacing (d) from the second end surface (7₂), which spacing is small relative to the length (l) of the metal portion (10) (Figures 1 and 2).

3. A conveyor apparatus according to claim 1 or claim 2 characterised in that the member of the conveyor line has at least two plastics portions (12, 12') which are disposed at a spacing (B) from each other, wherein end surfaces (7₁, 7₂) project outwardly beyond the metal portion (10) and that the plastics portions (12, 12') are connected together by the metal portion (10, 10') (Figures 3 to 9).

4. A conveyor apparatus according to one of claims 1 to 3 characterised in that each member has two metal portions (10, 10') in the form of bars, plates or rails, which are fixed to the side plate portions (16) of the plastics portions (12, 12') and to which preferably workpiece carriers are non-releasably attached.

5. A conveyor apparatus according to one of claims 1 to 4 characterised in that the metal portions (10, 10') comprise stainless steel and the plastics material is preferably UHMW-PE (DIN 7728).

6. A conveyor apparatus according to one of claims 1 to 5 characterised in that the plate-shaped metal portions (10, 10') have stiffening ribs (23) and that rotation-preventing means (11; 17, 18; 25) are provided between the metal portions (10, 10') and the plastics portions (12).

## Revendications

1. Dispositif de transport comprenant un cordon de maillons entraînés en étant contigus par l'intermédiaire de surfaces frontales (7₁, 7₂), et supportés au moyen de rails de guidage, des rainures (3, 6), qui s'étendent dans la direction longitudinale de transport (1) et sont destinées à recevoir des moyens de guidage et d'entraînement, étant disposées sur les faces opposées des maillons, et un alésage (5) traversant le maillon dans la direction transversale (2) en vue de recevoir une broche d'entraînement, caractérisé en ce qu'une pièce métallique (10), s'étendant dans la direction longitudinale de transport (1), est montée sur le maillon présentant au moins une première pièce en matière plastique (12), d'une manière telle que la surface frontale (7₁, 7₂) de ladite au moins une première pièce en matière plastique (12) fasse saillie au-delà de la pièce métallique (10) dans la direction longitudinale de transport (1), que la dilatation en longueur du maillon provoquée par une augmentation de température soit déterminée essentiellement par la dilatation en longueur de la pièce métallique (10), et que la longueur totale (L) du maillon soit plus grande que la longueur totale (l) de la pièce métallique (10).

2. Dispositif de transport selon la revendication 1, caractérisé en ce que la pièce métallique (10) est une broche de poussée (10), qui s'étend dans la direction longitudinale de transport (1), à travers la pièce en matière plastique (12) du maillon, et dont une extrémité (9) fait saillie vers l'extérieur, d'une valeur (b), au-delà de la première surface frontale (7₁) de la pièce en matière plastique (12), et dont l'autre extrémité (13) s'applique contre une surface de butée (15), qui est placée dans la pièce en matière plastique (12), s'étend dans la direction transversale (2) du maillon, et se situe à une distance (d) de la seconde surface frontale (7₂), qui est petite par rapport à la longueur (l) de la pièce métallique (10) (figures 1 et 2).

3. Dispositif de transport selon la revendication 1 ou 2, caractérisé en ce que le maillon du cordon de transport comporte au moins deux pièces en matière plastique (12, 12') placées à une distance (B) l'une de l'autre, des surfaces frontales (7₁, 7₂) faisant saillie vers l'extérieur au-delà de la pièce métallique (10), et en ce que les pièces en matière plastique (12, 12') sont reliées l'une à l'autre par la pièce métallique (10, 10') (figures 3 - 9).

4. Dispositif de transport selon l'une des revendications 1 à 3, caractérisé en ce que chaque maillon comporte, fixées sur les joues latérales (16) des pièces en matière plastique (12, 12'), deux pièces métalliques (10, 10') sous forme de barrettes, de languettes ou de rails, sur lesquelles sont montés, de manière inamovible, de préférence des supports de pièces à traiter.

5. Dispositif de transport selon l'une des revendications 1 à 4, caractérisé en ce que les pièces métalliques (10, 10') sont réalisées en acier inoxydable, et la matière plastique est, de préférence, du UHMW-PE (norme DIN 7728).

6. Dispositif de transport selon l'une des revendications 1 à 5, caractérisé en ce que les pièces métalliques (10, 10') en forme de languettes présentent des nervures de rigidification (23), et en ce qu'entre les pièces métalliques (10, 10') et les pièces en matière plastique (12), sont prévus des systèmes d'immobilisation en rotation (11; 17, 18; 25).
